(19) Europäisches Patentamt
European Patent Office
Office européen des brevets

(11) **EP 3 012 672 A1**

(12) **EUROPEAN PATENT APPLICATION**
published in accordance with Art. 153(4) EPC

(43) Date of publication:
**27.04.2016 Bulletin 2016/17**

(21) Application number: **14842646.3**

(22) Date of filing: **03.07.2014**

(51) Int Cl.:
**G02B 6/122** (2006.01)    **G06F 3/041** (2006.01)
**G06F 3/042** (2006.01)

(86) International application number:
**PCT/JP2014/067810**

(87) International publication number:
**WO 2015/033657 (12.03.2015 Gazette 2015/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **04.09.2013 JP 2013183176**
            **12.05.2014 JP 2014098454**

(71) Applicant: **Nitto Denko Corporation**
**Ibaraki-shi, Osaka 567-8680 (JP)**

(72) Inventors:
• **SHIMIZU Yusuke**
**Ibaraki-shi**
**Osaka 567-8680 (JP)**
• **YOSHIOKA Ryoma**
**Ibaraki-shi**
**Osaka 567-8680 (JP)**

(74) Representative: **Hoffmann Eitle**
**Patent- und Rechtsanwälte PartmbB**
**Arabellastraße 30**
**81925 München (DE)**

(54) **INPUT DEVICE**

(57)    There is provided an input device capable of judging information not intended for an input operation as unwanted information to input information properly even when the unintended information is sensed during the input of information such as a character with an input element such as a pen. The input device includes an optical waveguide W in a sheet form including an under cladding layer 1 in a sheet form, a plurality of linear cores 2 arranged in a lattice form and formed on a surface of the under cladding layer 1, and an over cladding layer 3 in a sheet form covering the cores 2. A surface part of the over cladding layer 3 corresponding to part of the cores 2 arranged in the lattice form serves as an input region. A CPU for controlling the input device incorporates a program which recognizes pressing as unwanted information when the pressing is sensed at a position at least a distance from the position of a tip input part of the input element corresponding to a number of the vertical or horizontal cores which corresponds to 4% of a total number of vertical or horizontal cores arranged in the lattice form while the tip input part is continuously moved in the input region.

FIG. 1A

FIG. 1B

**Description**

TECHNICAL FIELD

The present invention relates to an input device including an optical position detection means.

BACKGROUND ART

A position sensor for optically sensing a pressed position has been hitherto proposed (see PTL 1, for example). This position sensor is configured such that a plurality of cores serving as optical paths are arranged in vertical and horizontal directions and such that a cladding covers peripheral edge portions of the cores to provide a sheet form. The position sensor is also configured such that light from a light-emitting element is incident on one end surface of the cores and such that the light passing through the cores is received by a light-receiving element at the other end surface of the cores. When part of the surface of the position sensor in the sheet form is pressed with a finger and the like, some of the cores corresponding to the pressed part are crushed (decreased in cross-sectional area thereof as seen in the pressed direction). The level of light received by the light-receiving element is decreased in the cores corresponding to the pressed part, so that the pressed position is sensed.

An input device having a pressure-sensitive touch panel and a display has been proposed as an input device for inputting characters and the like (see PTL 2, for example). This input device is configured such that, when a character or the like is inputted onto the pressure-sensitive touch panel with a pen, the pressure-sensitive touch panel senses the position pressed with the tip of the pen to output the pressed position to the display, so that the inputted character or the like appears on the display.

RELATED ART DOCUMENT

PATENT DOCUMENTS

PTL 1: JP-A-HEI8 (1996)-234895
PTL 2: JP-A-2006-172230

SUMMARY OF INVENTION

In general, when a person writes a character or the like on a paper sheet with a writing implement such as a pen, the little finger of his/her hand which holds the writing implement, the base thereof (hypothenar) and the like also come into contact with the surface of the paper sheet.

Thus, when a character or the like is inputted onto the surface of the position sensor in the sheet form as disclosed in PTL 1 described above with a writing implement such as a pen, not only the tip of the pen but also the little finger of the hand which holds the writing implement, the base thereof and the like press the position sensor in the sheet form. As a result, not only a position of the inputted character or the like but also a position of the little finger and the base thereof which are unwanted are sensed.

Likewise, when a character or the like is inputted to the input device disclosed in PTL 2 described above, the pressure-sensitive touch panel senses not only the position pressed with the tip of the pen but also the position pressed with the little finger of the hand which holds the writing implement, the base thereof and the like. As a result, not only a position of the inputted character or the like but also a position of the little finger and the base thereof which are unwanted appear on the display.

To solve such a problem, the present assignee has proposed a position sensor configured not to sense unwanted parts such as a position of the little finger of a hand which holds an input element and the base of the little finger when information such as a character is inputted to the position sensor with the input element such as a pen, and has already applied for a patent (Japanese Patent Application No. 2013-44071). This position sensor includes an optical waveguide in a sheet form configured such that linear cores arranged in a lattice form are held between an under cladding layer and an over cladding layer both in a sheet form. The cores have an elasticity modulus higher than the elasticity modulus of the under cladding layer and the elasticity modulus of the over cladding layer. When the surface of the optical waveguide in the sheet form is pressed, the deformation rate of the cross section of the cores as seen in a pressed direction is lower than the deformation rates of the cross sections of the over cladding layer and the under cladding layer.

By making such settings, the bend in the cores is sharp along a tip input part of an input element in a part pressed with the tip input part (small area part) such as a pen tip while the cross-sectional area of the cores is held, to thereby cause light leakage (scattering) from the cores. On the other hand, the bend in the cores is gentle along a hand in a part pressed with part (large area part) of the hand holding the input element while the cross-sectional area of the cores is held, to thereby prevent the occurrence of the aforementioned light leakage (scattering). Thus, the level of light received by a light-receiving element is decreased in the cores pressed with the tip input part such as a pen tip, but is prevented from decreasing in the cores pressed with the hand holding the input element. At this time, the position of the tip input part such as a pen tip is sensed based on the decrease in the level of received light, and the part pressed with the hand in which the level of received light does not decrease is in the same state as an unpressed part and is not sensed. The position pressed with the tip input part such as a pen tip is continuously moved, so that the movement locus of the pressed position is sensed as input information such as a character, a drawing and a mark. Thus, the aforementioned position sensor may be used as an input device for information such as a character.

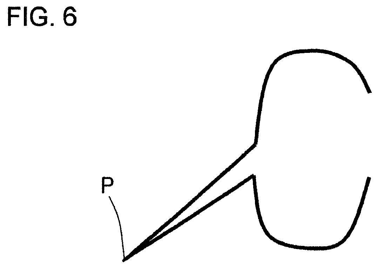

Unfortunately, the aforementioned position sensor senses a pressed part which is small in area as inputted information. When a user holds down the position sensor, for example, with one of his/her hands opposite the other hand holding the input element during the operation of inputting information such as a character into the position sensor with the tip input part such as a pen tip, there are cases in which the optical waveguide is pressed with a fingernail of the one hand and in which the one hand is put on a small piece such as a foreign substance on the surface of the optical waveguide, so that the optical waveguide is pressed with the foreign substance. In such cases, the position sensor senses pressing with other small area parts such as the fingernail and the foreign substance. The sensing of pressing with the fingernail and the like is unwanted sensing not intended for the input operation. Thus, when unwanted sensing is caused by the fingernail and the like, for example, during the input of a character "C", the character "C" becomes a distorted character, as shown in FIG. 6. In FIG. 6, a point P is a portion where the unwanted sensing is caused by the fingernail and the like.

In view of the foregoing, it is therefore an object of the present invention to provide an input device capable of judging information not intended for an input operation as unwanted information to input information properly even when the unintended information is sensed during the input of information such as a character with an input element such as a pen.

To accomplish the aforementioned object, an input device according to the present invention comprises: an optical waveguide in a sheet form including an under cladding layer in a sheet form, a plurality of linear cores arranged in a lattice form and formed of horizontal and vertical cores on a surface of the under cladding layer, and an over cladding layer in a sheet form formed on the surface of the under cladding layer so as to cover the cores; a light-emitting element connected to one end surface of the cores of the optical waveguide; a light-receiving element connected to the other end surface of the cores; and an unwanted information recognition means for recognizing unwanted input information, wherein the cores have an elasticity modulus higher than that of the under cladding layer and that of the over cladding layer, wherein the deformation rate of a cross section of the cores as seen in a pressed direction is lower than the deformation rates of cross sections of the over cladding layer and the under cladding layer when a surface of the over cladding layer is pressed, wherein light emitted from the light-emitting element passes through the cores of the optical waveguide and is received by the light-receiving element, wherein a surface part of the over cladding layer corresponding to part of the cores arranged in the lattice form of the optical waveguide serves as an input region, wherein a continuous movement locus of a tip input part of an input element in the input region is specified as input information, based on the amount of light propagating in the cores which is changed by the movement of the tip input part, and wherein the unwanted information recognition means recognizes pressing as unwanted information when the pressing is sensed at a position at least a distance from the position of the tip input part corresponding to the vertical or horizontal cores which corresponds to 4% of a total number of vertical or horizontal cores arranged in the lattice form, while the tip input part of the input element is continuously moved in the input region.

The term "deformation rate" as used in the present invention refers to the proportion of the amount of change in the thickness of the cores, the over cladding layer and the under cladding layer as seen in the pressed direction during the pressing to the thickness thereof before the pressing.

In the input device according to the present invention, there are cases in which, when a user holds down the input device, for example, with one of his/her hands opposite the other hand holding the input element during the operation of inputting information such as a character into the input region while holding the input element such as a pen in the other hand, a small area part such as a fingernail of the one hand holding down the input device presses the input region. In that case, the pressing with the fingernail and the like is also sensed. However, the input device according to the present invention, which includes the unwanted information recognition means, is capable of recognizing pressing as unwanted information when the pressing is sensed at a position at least a distance from the position of the tip input part corresponding to a number of the vertical or horizontal cores which corresponds to 4% of a total number of vertical or horizontal cores arranged in the lattice form during the input operation. This achieves the proper input of intended information into the input region while disregarding the unwanted information.

BRIEF DESCRIPTION OF DRAWINGS

[FIG. 1] FIG. 1A is a plan view schematically showing one embodiment of an input device according to the present invention, and FIG. 1B is an enlarged sectional view thereof.

[FIG. 2] FIG. 2A is a sectional view schematically showing the input device pressed with an input element, and FIG. 2B is a sectional view schematically showing the input device pressed with a hand.

[FIG. 3] FIG. 3 is an illustration showing an example of a flow diagram for a CPU program in the input device.

[FIG. 4] FIGS. 4A to 4F are enlarged plan views schematically showing configurations of intersection of linear cores arranged in a lattice form in the input device.

[FIG. 5] FIGS. 5A and 5B are enlarged plan views schematically showing paths of light at intersections of the linear cores arranged in the lattice form.

[FIG. 6] FIG. 6 is a plan view schematically showing an example of an instance in which unwanted information is recognized.

DESCRIPTION OF EMBODIMENTS

Next, an embodiment according to the present invention will now be described in detail with reference to the drawings.

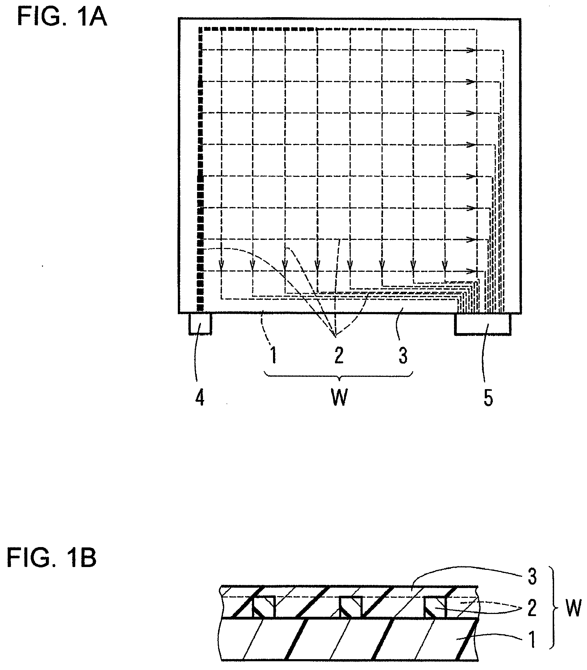

FIG. 1A is a plan view showing one embodiment of an input device. FIG. 1B is a sectional view, on an enlarged scale, of a middle portion of the input device. The input device of this embodiment includes: an optical waveguide W in a rectangular sheet form configured such that linear cores 2 arranged in a lattice form are held between an under cladding layer 1 and an over cladding layer 3 both in a rectangular sheet form; a light-emitting element 4 connected to one end surface of the linear cores 2 arranged in the lattice form; and a light-receiving element 5 connected to the other end surface of the linear cores 2. Light emitted from the light-emitting element 4 passes through the cores 2 and is received by the light-receiving element 5. A surface part of the over cladding layer 3 corresponding to part of the linear cores 2 arranged in a lattice form serves as an input region. In FIG. 1A, the cores 2 are indicated by broken lines, and the thickness of the broken lines indicates the thickness of the cores 2. Also, in FIG. 1A, the number of cores 2 are shown as abbreviated. Arrows in FIG. 1A indicate the directions in which light travels.

In the optical waveguide W, the cores 2 have an elasticity modulus higher than the elasticity modulus of the under cladding layer 1 and the elasticity modulus of the over cladding layer 3. Accordingly, when the surface of the optical waveguide W in the rectangular sheet form is pressed, the deformation rate of the cross section of the cores 2 as seen in a pressed direction is lower than the deformation rates of the cross sections of the over cladding layer 3 and the under cladding layer 1.

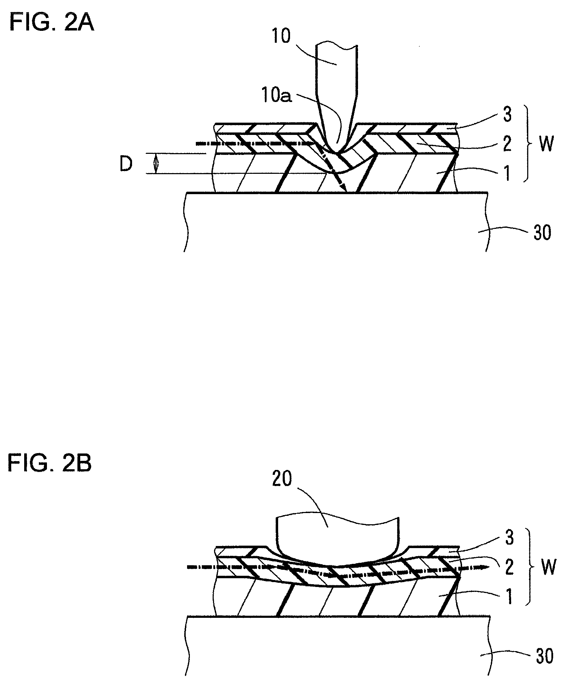

As shown in sectional views in FIGS. 2A and 2B, when the input device is placed on a flat base 30 such as a table and information such as a character is inputted, for example, by writing into the input region with an input element 10 such as a pen held in a hand 20, part of the optical waveguide W which is pressed with a tip input part 10a such as a pen tip (with reference to FIG. 2A) and part of the optical waveguide W which is pressed with the little finger of the hand 20 or the base thereof (hypothenar) (with reference to FIG. 2B) are deformed in cross sections as seen in the pressed direction in such a manner that the over cladding layer 3 and the under cladding layer 1 which have a lower elasticity modulus are crushed, and that the cores 2 having a higher elasticity modulus are bent along the parts of the tip input part 10a and the hand 20 so as to sink in the under cladding layer 1 while holding the cross-sectional area thereof.

In the part pressed with the tip input part 10a, the cores 2 are bent sharply at this time, as shown in FIG. 2A, because the tip input part 10a is sharp-pointed (is a small area part), so that light leakage (scattering) from the cores 2 occurs (with reference to dash-double-dot arrows in FIG. 2A). In the part pressed with the hand 20 holding the input element 10, on the other hand, the cores 2 are bent gently, as shown in FIG. 2B, because the hand 20 is considerably larger and rounder than the tip input part 10a (is a large area part), so that the aforementioned light leakage (scattering) does not occur (light travels in the cores 2 without leaking from the cores 2) (with reference to dash-double-dot arrows in FIG. 2B). Thus, the level of light received by the light-receiving element 5 is decreased in the cores 2 pressed with the tip input part 10a, but is prevented from decreasing in the cores 2 pressed with the hand 20 holding the input element 10. Theposition (coordinates) of the tip input part 10a is sensed based on the decrease in the level of received light. The part pressed with the hand 20 in which the level of detected light does not decrease is in the same state as an unpressed part, and is not sensed.

When the aforementioned pressing with the tip input part 10a is released (the input is completed), the under cladding layer 1, the cores 2 and the over cladding layer 3 return to their original states (with reference to FIG. 1B) because of their restoring forces. It is preferable that the sinking depthD of the cores 2 in the under cladding layer 1 is a maximum of 2000 $\mu$m. When the sinking depth D exceeds 2000 $\mu$m, there are dangers that the under cladding layer 1, the cores 2 and the over cladding layer 3 do not return to their original states and that cracking occurs in the optical waveguide W.

The input device further includes a CPU (central processing unit) (not shown) for controlling the input device. The CPU recognizes a line from the point coordinates of the pressed positions. Specifically, for the input of information such as a character comprised of a line, the tip input part 10a such as a pen tip is continuously moved in the input region. At this time, data about the point coordinates of the pressed positions with the tip input part 10a being moved is acquired by the CPU intermittently at predetermined time intervals. The CPU connects these point coordinates to recognize a line which is a continuous movement locus of the tip input part 10a. When the data about the point coordinates cannot be acquired a predetermined number of times, the CPU stops connecting the point coordinates to independently recognize a line constituting a character and the like.

When a user holds down the input device, for example, with one of his/her hands opposite the other hand 20 holding the input element 10 during the operation of inputting information such as a character into the input device while holding the input element 10 such as a pen in the hand 20, there are cases in which the optical waveguide W is pressed with a fingernail of the one hand and in which the one hand is put on a small piece such as a foreign substance on the surface of the optical waveguide W, so that the optical waveguide W is pressed with the foreign substance. At this time, pressing with a small area part such as the fingernail and the foreign substance is also sensed. The sensing of pressing with the fingernail and the like is unwanted sensing not intended for the input operation. In such a case, the point coordinates due to the unwanted pressing are acquired in an interrupting manner during the operation of inputting a single line. As a result, the unwanted point coordinates are also connected to other point coordinates. As stated above, when pressing not intended for the input operation is sensed, for example, during the input of a character "C", the character "C" is recognized as a distorted character, as shown in FIG. 6.

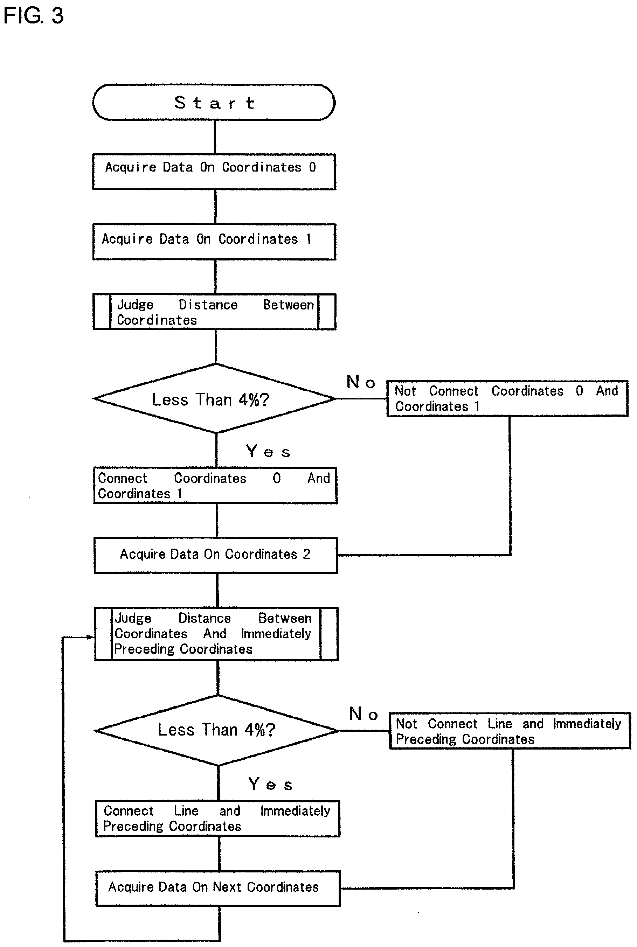

The input device is controlled by the CPU so that pressing not intended for an input operation, if sensed, is recognized as unwanted information. Specifically, the CPU incorporates a program (unwanted information recognition means) which recognizes pressing not intended for an input operation as described above as unwanted information when the pressing is sensed at a position at least a distance from the position of the tip input part 10a corresponding to a number of the vertical or horizontal cores 2 which corresponds to 4% of a total number of vertical or horizontal cores 2 arranged in the lattice form while information such as a character is inputted by continuously moving the tip input part 10a of the input element 10 in the input region. Thus, the input device is capable of recognizing a proper character if the pressing not intended for the input operation as described above is sensed. An example of a flow diagram for the program incorporated in the CPU in this case is shown in FIG. 3. When the number of vertical cores 2 differs from the number of horizontal cores 2, the greater one is used from the viewpoint of making misrecognition less prone to occur.

The position of the tip input part 10a sensed by the input device and the movement locus (such as a character and a drawing) of the tip input part 10a which is produced by the successive positions thereof are stored as electronic data in a storage means such as a memory or sent to a display to appear on the display.

The elasticity moduli and the like of the cores 2, the under cladding layer 1 and the over cladding layer 3 will be described in further detail.

The elasticity modulus of the cores 2 is preferably in the range of 1 to 10 GPa, and more preferably in the range of 2 to 5 GPa. When the elasticity modulus of the cores 2 is less than 1 GPa, there are cases in which the cross-sectional area of the cores 2 cannot be held (the cores 2 are crushed) because of the pressure of the tip input part 10a, depending on the shape of the tip input part 10a such as a pen tip. In such cases, there is a danger that the position of the tip input part 10a is not properly sensed. On the other hand, when the elasticity modulus of the cores 2 is greater than 10 GPa, there are cases in which the bend in the cores 2 because of the pressure of the tip input part 10a becomes a gentle bend, rather than a sharp bend along the tip input part 10a. This causes no light leakage (scattering) from the cores 2, so that the level of light received by the light-receiving element 5 is not decreased. In such cases, there is a danger that the position of the tip input part 10a is not properly sensed. The cores 2 have the following dimensions: a thickness in the range of 5 to 100 $\mu$m, and a width in the range of 5 to 500 $\mu$m, for example.

The elasticity modulus of the over cladding layer 3 is preferably in the range of 0.1 MPa to less than 10 GPa, and more preferably in the range of 1 MPa to less than 5 GPa. When the elasticity modulus of the over cladding layer 3 is less than 0.1 MPa, there are cases in which the over cladding layer 3 is so soft as to be damaged by the pressure of the tip input part 10a, depending on the shape of the tip input part 10a such as a pen tip. In such cases, it is impossible for the over cladding layer 3 to protect the cores 2. On the other hand, when the elasticity modulus of the over cladding layer 3 is not less than 10 GPa, the over cladding layer 3 is not deformed by the pressures of the tip input part 10a and the hand 20 in such a manner as to be crushed but the cores 2 are crushed, resulting in a danger that the position of the tip input part 10a is not properly sensed. The over cladding layer 3 has a thickness in the range of 1 to 200 $\mu$m, for example.

The elasticity modulus of the under cladding layer 1 is preferably in the range of 0.1 MPa to 1 GPa, and more preferably in the range of 1 to 100 MPa. When the elasticity modulus of the under cladding layer 1 is less than 0. 1 MPa, there are cases in which the under cladding layer 1 is too soft to return to its original state after being pressed with the tip input part 10a such as a pen tip, so that the pressing cannot be continuously performed. On the other hand, when the elasticity modulus of the under cladding layer 1 is greater than 1 GPa, the under cladding layer 1 is not deformed by the pressures of the tip input part 10a and the hand 20 in such a manner as to be crushed but the cores 2 are crushed, resulting in a danger that the position of the tip input part 10a is not properly sensed. The under cladding layer 1 has a thickness in the range of 20 to 2000 $\mu$m, for example.

Examples of the materials for the formation of the cores 2, the under cladding layer 1 and the over cladding layer 3 include photosensitive resins and thermosetting resins. The optical waveguide W may be produced by a manufacturing method depending on the materials. The cores 2 have a refractive index higher than the refractive indices of the under cladding layer 1 and the over cladding layer 3. The adjustment of the elasticity moduli and the refractive indices may be made, for example, by adjusting the selection of the types of the materials for the formation of the cores 2, the under cladding layer 1 and the over cladding layer 3, and the composition ratio thereof. A rubber sheet may be used as the under cladding layer 1, and the cores 2 may be formed in a lattice form on the rubber sheet.

Also, an elastic layer such as a rubber layer may be provided on the back surface of the under cladding layer 1. In this case, when the restoring forces of the under cladding layer 1, the cores 2 and the over cladding layer 3 are weakened or when the under cladding layer 1, the cores 2 and the over cladding layer 3 are originally made of materials having weak restoring forces, the elastic force of the elastic layer may be used to assist the weak restoring forces, thereby allowing the under cladding layer 1, the cores 2 and the over cladding layer 3 to return to their original states after the pressing with the tip input part 10a of the input element 10 is released.

It is only necessary for the input element 10 to be able to press the optical waveguide W in the aforementioned manner. The input element 10 may be a writing implement capable of writing on a paper sheet with ink and the like or a mere rod or stick which dispenses no ink and the like.

The amount of light leakage (scattering) due to the sharp bend of the cores 2 in the part pressed with the tip input part 10a is important for the purposes of detecting only the position pressed with such as the tip input part 10a of the input element 10 having the small area part and not sensing the position pressed with such as the hand 20 holding the input element 10 having the large area part as mentioned above. A refractive index difference between the cores 2 and the under and over cladding layers 1 and a refractive index difference between the cores 2 and 3 are defined, for example, using the ratio A (= R/T) between the radius of curvature R (in $\mu$m) of the tip input part 10a such as a pen tip and the thickness T (in $\mu$m) of the cores 2. Then, the maximum value $\Delta$max of the refractive index difference is expressed as in Equation (1) below. When the refractive index difference is greater than the maximum value $\Delta$max, the amount of light leakage (scattering) is small even if the surface of the optical waveguide W is pressed with the tip input part 10a, so that the level of light received by the light-receiving element 5 is not sufficiently decreased. This makes it difficult to distinguish between the position of the tip input part 10a and the position of the hand 20.

[MATH. 1]

$$\Delta max = 8.0 \times 10^{-2} - A \times (5.0 \times 10^{-4}) \qquad (1)$$

On the other hand, the minimum value $\Delta$min of the refractive index differences is expressed as in Equation (2) below. When the refractive index difference is less than the minimum value $\Delta$min, the light leakage (scattering) occurs also in the part pressed with the hand 20. This makes it difficult to distinguish between the position of the tip input part 10a and the position of the hand 20.

[MATH. 2]

$$\Delta min = 1.1 \times 10^{-2} - A \times (1.0 \times 10^{-4}) \qquad (2)$$

It is therefore preferable that the refractive index difference ranges between the maximum value $\Delta$max and the minimum value $\Delta$min. For example, the refractive index difference is in the range of $1.0 \times 10^{-3}$ to $7.95 \times 10^{-2}$, when the radius of curvature R (in $\mu$m) of the tip input part 10a is in the range of 100 to 1000, the thickness T (in $\mu$m) of the cores 2 is in the range of 10 to 100, and the ratio A is in the range of 1 to 100. When the ratio A is greater than 100, the minimum value $\Delta$min shall be $1.0 \times 10^{-3}$ (constant).

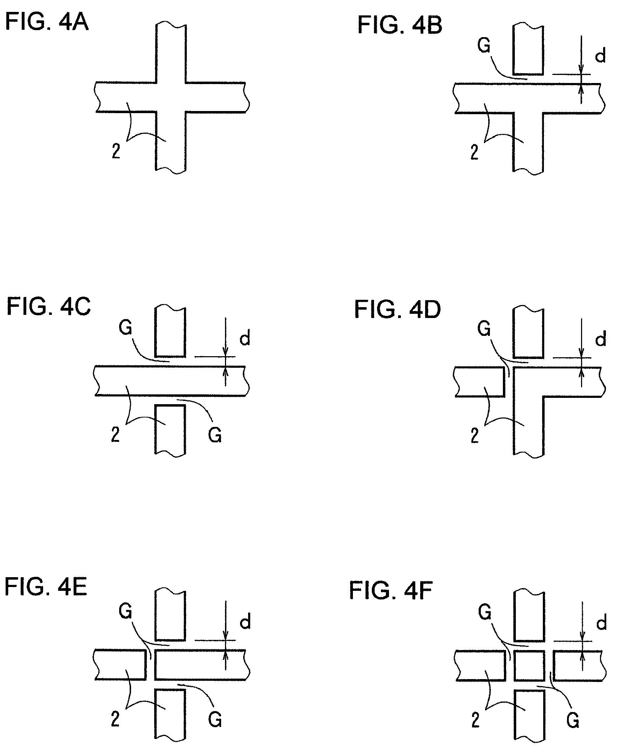

Each intersection of the linear cores 2 arranged in the lattice form is generally configured to be continuous in all of the four intersecting directions as shown in enlarged plan view in FIG. 4A in the aforementioned embodiment, but may be of other configurations. For example, each intersection may be separated by a gap G to become discontinuous only in one of the intersecting directions, as shown in FIG. 4B. The gap G is made of a material for the formation of the under cladding layer 1 or the over cladding layer 3. The gap G has a width d greater than 0 (zero) (it is only necessary that the gap G is formed) and generally not greater than 20 $\mu$m. Likewise, as shown in FIGS. 4C and 4D, each intersection may be discontinuous in two intersecting directions (in two opposed directions in FIG. 4C, and in two adjacent directions in FIG. 4D). Alternatively, each intersection may be discontinuous in three intersecting directions, as shown in FIG. 4E. Also, each intersection may be discontinuous in all of the four intersecting directions, as shown in FIG. 4F. Further, the cores 2 may be in a lattice form including two or more types of intersections shown in FIGS. 4A to 4F. The term "lattice form" formed by the linear cores 2 as used in the embodiment shall be meant to include a lattice form in which part or all of the intersections are formed in the aforementioned manner.

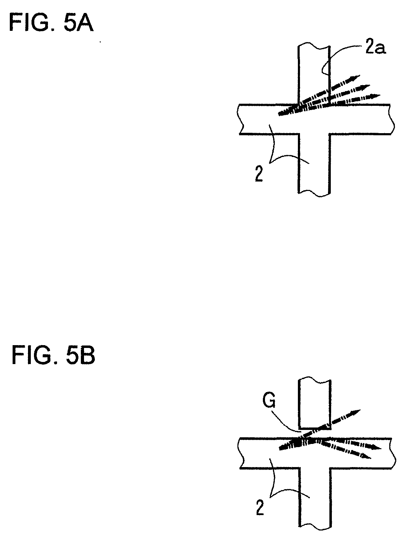

In particular, intersections which are discontinuous in at least one intersecting direction as shown in FIGS. 4B to 4F are capable of reducing intersection losses of light. At an intersection which is continuous in all of the four intersecting directions as shown in FIG. 5A, attention will be given on one intersecting direction (upward direction as seen in FIG. 5A). Then, part of light incident on the intersection reaches a wall surface 2a of a first core 2 perpendicular to a second core 2 through which the light travels, and is transmitted through the first core 2 (with reference to dash-double-dot arrows in FIG. 5A) because of the large angle of reflection from the wall surface. Such light transmission occurs also in the opposite intersecting direction (downward direction as seen in FIG. 5A). As shown in FIG. 5B, on the other hand, when an intersection is made discontinuous by the gap G in one intersecting direction (upward direction as seen in FIG. 5B), an interface between the gap G and a core 2 is formed. Then, part of light transmitted through the core 2 with reference to FIG. 5A is not transmitted through the core 2 but is reflected from the interface to continue traveling through the core 2 (with reference to dash-double-dot arrows in FIG. 5B) because of the smaller angle of reflection at the interface. Based on these facts, the reduction in intersection losses of light is achieved by making the intersection discontinuous in at least one intersecting direction as mentioned above. As a result, the sensitivity for sensing of the pressed position with a pen tip and the like is increased.

Next, an inventive example of the present invention will be described in conjunction with a comparative example. It should be noted that the present invention is not limited to the inventive example.

EXAMPLES

[Material for Formation of Over Cladding Layer]

Component a: 30 parts by weight of an epoxy resin (EPOGOSEY PT available from Yokkaichi Chemical Company Limited).
Component b: 70 parts by weight of an epoxy resin (EHPE3150 available from Daicel Corporation).
Component c: 4 parts by weight of a photo-acid generator (CPI-200K available from San-Apro Ltd.).
Component d: 100 parts by weight of ethyl lactate (available from Wako Pure Chemical Industries, Ltd.).

A material for the formation of an over cladding layer was prepared by mixing these components a to d together.

[Material for Formation of Cores]

Component e: 80 parts by weight of an epoxy resin (EHPE3150 available from Daicel Corporation).
Component f: 20 parts by weight of an epoxy resin (YDCN-700-10 available from Nippon Steel & Sumikin Chemical Co., Ltd.).
Component g: 1 part by weight of a photo-acid generator (SP170 available from ADEKA Corporation).
Component h: 50 parts by weight of ethyl lactate (available from Wako Pure Chemical Industries, Ltd.).

A material for the formation of cores was prepared by mixing these components e to h together.

[Material for Formation of Under Cladding Layer]

Component i: 75 parts by weight of an epoxy resin (EPOGOSEY PT available from Yokkaichi Chemical Company Limited).
Component j : 25 parts by weight of an epoxy resin (JER1007 available from Mitsubishi Chemical Corporation).
Component k: 4 parts by weight of a photo-acid generator (CPI-200K available from San-Apro Ltd.).
Component l: 50 parts by weight of ethyl lactate (available from Wako Pure Chemical Industries, Ltd.).

A material for the formation of an under cladding layer was prepared by mixing these components i to 1 together.

[Production of Optical Waveguide]

The over cladding layer was formed on a surface of a base material made of glass by a spin coating method with the use of the aforementioned material for the formation of the over cladding layer. The over cladding layer had a thickness of 5 $\mu$m, an elasticity modulus of 1.2 GPa, and a refractive index of 1.503.
Next, the linear cores arranged in a lattice form were formed on a surface of the over cladding layer by a photolithographic method with the use of the aforementioned material for the formation of the cores. The number of vertical cores arranged in the lattice form was 1024, and the number of horizontal cores arranged in the lattice form was 1024. The cores had a thickness of 30 $\mu$m, a width of 100 $\mu$m in a portion of the lattice form, a spacing of 600 $\mu$m, an elasticity modulus of 3 GPa, and a refractive index of 1.523.
Next, the under cladding layer was formed on the surface of the over cladding layer by a spin coating method with the use of the aforementioned material for the formation of the under cladding layer so as to cover the cores. The under cladding layer had a thickness of 200 $\mu$m (as measured from the surface of the over cladding layer), an elasticity modulus of 3 MPa, and a refractive index of 1.503.
Then, a substrate made of PET (having a thickness of 1 mm) with a double-sided adhesive tape (having a thickness of 25 $\mu$m) affixed to one surface thereof was prepared. Next, the other adhesive surface of the double-sided adhesive tape was affixed to a surface of the under cladding layer. In that state, the over cladding layer was stripped from the base material made of glass.

[Production of Input Device]

A light-emitting element (XH85-S0603-2s available from Optowell Co., Ltd.) was connected to one end surface of the cores of the aforementioned optical waveguide, and a light-receiving element (s10226 available from Hamamatsu Photonics K.K.) was connected to the other end surface of the cores thereof. Then, a circuit was provided on which the light-emitting element, the light-receiving element, a CPU (dsPIC33FJ128MC706 available from Microchip Technology Inc.) for controlling the elements, a wireless module, a memory, a lithium-ion battery (3.7 V) and the like were mounted. Then, a program in which a distance from an inputting pen tip to a position where unintended pressing recognized as unwanted information was sensed was set to at least a distance across cores the number of which corresponded to 3% of a total number of vertical cores arranged in the lattice form was incorporated in the aforementioned CPU. In this manner, an input device in Inventive Example was produced.

[Comparative Example]

An input device in Comparative Example was prepared such that the distance from the inputting pen tip to the position where unintended pressing recognized as unwanted information was sensed was set to at least a distance across cores the number of which corresponded to 5% of the number of vertical cores arranged in the lattice form.

[Evaluation of Input Device]

A personal computer (referred to hereinafter as a "PC") was further prepared. Software (program) for converting coordinates in an input region of the input device in each of Inventive and Comparative Examples into coordinates on the screen of a display to display a character and the like inputted by means of the input device on the display is incorporated in the PC. The PC included a receiving means so as to be able to receive radio waves (information) from a wireless module of the input device. The PC and the input device were connected for transmission of information therebetween by radio.
Then, the input device in each of Inventive and Comparative Examples was placed on a desk, with the over cladding layer positioned upside. Next, a user held a pen in his/her right hand, and placed a fingernail of his/her left hand on the input region while inputting a character into the input region of the input device with the pen.
As a result, the inputted character appeared on the display properly in Inventive Example, but the position of the fingernail of the left hand in the input region was recognized, so that the inputted character appeared in disorder in Comparative Example.
Although specific forms in the present invention have been described in the aforementioned example, the aforementioned example should be considered as merely illustrative and not restrictive. It is contemplated that various modifications evident to those skilled in the art could be made without departing from the scope of the present invention.
The input device according to the embodiment is applicable to enabling the proper input of information not intended for an input operation even when the unintended information is sensed during the input of information such as a character with an input element such as a pen.

REFERENCE SIGNS LIST

| W | Optical waveguide |
|---|---|
| 1 | Under cladding layer |
| 2 | Cores |
| 3 | Over cladding layer |

**Claims**

1. An input device comprising:

an optical waveguide in a sheet form including an under cladding layer in a sheet form, a plurality of linear cores arranged in a lattice form of horizontal and vertical cores on a surface of the under cladding layer, and an over cladding layer in a sheet form formed on the surface of the under cladding layer so as to cover the cores;
a light-emitting element connected to one end surface of the cores of the optical waveguide;
a light-receiving element connected to the other end surface of the cores; and
an unwanted information recognition means for recognizing unwanted input information,
wherein the cores have an elasticity modulus higher than that of the under cladding layer and that of the over cladding layer,
wherein the deformation rate of a cross section of the cores as seen in a pressed direction is lower than the deformation rates of cross sections of the over cladding layer and the under cladding layer when a surface of the over cladding layer is pressed,
wherein light emitted from the light-emitting element passes through the cores of the optical waveguide and is received by the light-receiving element,
wherein a surface part of the over cladding layer corresponding to part of the linear cores arranged in the lattice form of the optical waveguide serves as an input region,
wherein a continuous movement locus of a tip input part of an input element in the input region is specified as input information, based on the amount of light propagating in the cores which is changed by the movement of the tip input part, and
wherein the unwanted information recognition means recognizes pressing as unwanted information when the pressing is sensed at a position at least a distance from the position of the tip input part corresponding to a number of the vertical or horizontal cores which corresponds to 4% of a total number of vertical or horizontal cores arranged in the lattice form, while the tip input part of the input element is continuously moved in the input region.

FIG. 1A

FIG. 1B

FIG. 2A

FIG. 2B

## FIG. 3

```
                    ┌─────────────────────────┐
                    │         S t a r t        │
                    └─────────────────────────┘
                                 │
                    ┌─────────────────────────┐
                    │ Acquire Data On Coordinates 0 │
                    └─────────────────────────┘
                                 │
                    ┌─────────────────────────┐
                    │ Acquire Data On Coordinates 1 │
                    └─────────────────────────┘
                                 │
                    ┌─────────────────────────┐
                    │ Judge    Distance   Between │
                    │ Coordinates                 │
                    └─────────────────────────┘
                                 │
                         ╱───────────────╲                    ┌─────────────────────────┐
                        ╱  Less Than 4%?   ╲───── N o ─────────│ Not Connect Coordinates 0 And │
                         ╲───────────────╱                     │ Coordinates 1               │
                                 │                             └─────────────────────────┘
                               Y e s                                        │
                    ┌─────────────────────────┐                             │
                    │ Connect    Coordinates  0   And │                     │
                    │ Coordinates 1               │                         │
                    └─────────────────────────┘                             │
                                 │                                          │
                    ┌─────────────────────────┐                            │
                    │ Acquire Data On Coordinates 2 │────────────────────────┘
                    └─────────────────────────┘
                                 │
                    ┌─────────────────────────┐
              ┌────▶│ Judge    Distance   Between │
              │     │ Coordinates   And  Immediately │
              │     │ Preceding Coordinates       │
              │     └─────────────────────────┘
              │                  │
              │          ╱───────────────╲                    ┌─────────────────────────┐
              │         ╱  Less Than 4%?   ╲───── N o ─────────│ Not Connect Line and Immediately │
              │          ╲───────────────╱                     │ Preceding Coordinates       │
              │                  │                             └─────────────────────────┘
              │                Y e s                                        │
              │     ┌─────────────────────────┐                            │
              │     │ Connect   Line   and  Immediately │                   │
              │     │ Preceding Coordinates       │                         │
              │     └─────────────────────────┘                            │
              │                  │                                         │
              │     ┌─────────────────────────┐                           │
              │     │ Acquire Data On Next Coordinates │─────────────────────┘
              │     └─────────────────────────┘
              │                  │
              └──────────────────┘
```

13

FIG. 4A

FIG. 4B

FIG. 4C

FIG. 4D

FIG. 4E

FIG. 4F

FIG. 5A

FIG. 5B

FIG. 6

## INTERNATIONAL SEARCH REPORT

| International application No. |
|---|
| PCT/JP2014/067810 |

| A. CLASSIFICATION OF SUBJECT MATTER |
|---|
| *G02B6/122*(2006.01)i, *G06F3/041*(2006.01)i, *G06F3/042*(2006.01)i |

According to International Patent Classification (IPC) or to both national classification and IPC

| B. FIELDS SEARCHED |
|---|
| Minimum documentation searched (classification system followed by classification symbols) |
| G02B6/122, G06F3/041, G06F3/042 |

Documentation searched other than minimum documentation to the extent that such documents are included in the fields searched

| Jitsuyo Shinan Koho | 1922–1996 | Jitsuyo Shinan Toroku Koho | 1996–2014 |
|---|---|---|---|
| Kokai Jitsuyo Shinan Koho | 1971–2014 | Toroku Jitsuyo Shinan Koho | 1994–2014 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2010-151992 A (Fuji Xerox Co., Ltd.), 08 July 2010 (08.07.2010), entire text; all drawings & US 2010/0156848 A1 | 1 |
| A | US 2010/0097348 A1 (Dae Seo PARK), 22 April 2010 (22.04.2010), entire text; all drawings & KR 10-2010-0042480 A | 1 |
| A | JP 61-188515 A (Mitsubishi Rayon Co., Ltd.), 22 August 1986 (22.08.1986), entire text; all drawings (Family: none) | 1 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 28 August, 2014 (28.08.14) | 09 September, 2014 (09.09.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2014/067810

C (Continuation).   DOCUMENTS CONSIDERED TO BE RELEVANT

| Category* | Citation of document, with indication, where appropriate, of the relevant passages | Relevant to claim No. |
|---|---|---|
| A | JP 1-172916 A  (NOK Corp.),<br>07 July 1989 (07.07.1989),<br>entire text; all drawings<br>(Family: none) | 1 |
| A | JP 2005-107804 A  (Japan Aviation Electronics Industry Ltd.),<br>21 April 2005 (21.04.2005),<br>entire text; all drawings<br>(Family: none) | 1 |
| A | JP 2013-008138 A  (Nitto Denko Corp.),<br>10 January 2013 (10.01.2013),<br>entire text; all drawings<br>& US 2012/0327033 A1     & CN 102855029 A | 1 |
| A | JP 2011-186550 A  (Lenovo Singapore Pte. Ltd.),<br>22 September 2011 (22.09.2011),<br>paragraph [0004]; fig. 11<br>(Family: none) | 1 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI81996234895 A
- JP 2006172230 A

- JP 2013044071 A